# EUROPÄISCHE PATENTSCHRIFT

(11) **EP 3 075 291 B1**
(45) Veröffentlichungstag und Bekanntmachung des Hinweises auf die Patenterteilung: **04.09.2019**
(21) Anmeldenummer: 16154656.9
(22) Anmeldetag: 08.02.2016
(51) Int. Cl.: A47J 31/46

(54) **GETRÄNKEZUBEREITUNGSVORRICHTUNG SOWIE BETRIEBSVERFAHREN**
BEVERAGE PREPARATION DEVICE AND METHOD OF OPERATION
DISPOSITIF DE PRÉPARATION DE BOISSONS ET PROCÉDÉ DE FONCTIONNEMENT

(30) Priorität: 02.04.2015 DE 102015105183
(43) Veröffentlichungstag der Anmeldung: 05.10.2016
(73) Patentinhaber: Eugster/Frismag AG, 8580 Amriswil (CH)
(72) Erfinder: FISCHER, Daniel, 8590 Romanshorn (CH); SONDEREGGER, Lukas, 9435 Heerbrugg (CH)
(74) Vertreter: Patentanwälte Behrmann Wagner PartG mbB

(56) Entgegenhaltungen:
- EP-A1- 2 407 068
- EP-B1- 2 196 118
- DE-U1-202012 009 075

## Beschreibung

Die Erfindung betrifft eine Getränkezubereitungsvorrichtung gemäß dem Oberbegriff des Anspruchs 1, insbesondere eine Kaffeemaschine, mit einem Gehäuse und mit einer Einrichtung zum Erwärmen und/oder Aufschäumen von Milch und mit einer, bevorzugt als Saugleitung ausgebildeten Milchleitung, über die die Einrichtung zum Erwärmen und/oder Aufschäumen mit Milch versorgbar ist, wobei die Milchleitung fluidleitend mit Andockmitteln verbunden ist, die ein mittels eines Antriebs, insbesondere eine Elektromotors, zwischen mindestens einer Parkposition und mindestens einer davon, insbesondere entlang eines geradlinigen Verstellweges, beabstandeten Andockposition verstellbares Andockelement umfassen, das in der Andockposition fluidlleitend mit einem Versorgungsanschluss für Milch verbunden (d.h. durch Verstellen in die Andockposition fluidleitend mit dem Versorgungsanschluss verbindbar) und in der Parkposition von diesem abgekoppelt (keine fluidleitende Verbindung), d.h. durch Verstellen aus der mindestens einen Andockposition in die mindestens eine Parkposition von dem Versorgungsanschluss abkoppelbar (fluidisch trennbar) ist.

Ferner betrifft die Erfindung ein Betriebsverfahren für eine solche Getränkezubereitungsvorrichtung gemäß Anspruch 12.

Getränkezubereitungsvorrichtungen mit Milcherwärmungs- und/oder Aufschäumfunktion sind seit langem bekannt. Die hierzu zum Einsatz kommende Erwärmungs- und/oder Aufschäumeinrichtung umfasst in der Regel eine Düsenanordnung (Strahlpumpe), die fluidleitend mit einer Dampfversorgungsleitung verbunden ist, wodurch der durch eine Treibdüse der Düsenanordnung ausströmende Dampf Milch durch eine Milchleitung (hier: Saugleitung) ansaugt, die dann in einer Misch- bzw. Aufschäumkammer erwärmt und/oder aufgeschäumt und dann durch eine Auslassöffnung einer Kaffeetasse zugeführt wird. In die Milchleitung mündet in der Regel eine Luftleitung, über die die Milch mit Luft für den fakultativen Aufschäumvorgang versorgbar ist. Getränkezubereitungsvorrichtungen mit Milcherwärmungs- und/oder Aufschäumvorrichtung sind beispielsweise in der EP 2 807 964 A1 der EP 1 115 317 B1, der EP 2 196 118 B1 oder der DE 20 2011 107 306 U1 beschrieben.

Auch bekannt sind Getränkezubereitungsvorrichtungen, bei denen ein Milchbehältnis in einer verschwenkbar angeordneten Gehäusetür angeordnet und mit der Milchleitung der Milcherwärmungs- und/oder Aufschäumeinrichtung verbunden wird. Bevorzugt ist es, den eigentlichen Milchbehälter im Bereich der Tür mit einer ortsfesten Kopplungseinrichtung zu verbinden, die über eine Milchleitung mit einem türseitigen Versorgungsanschluss mit Milch fluidleitend verbunden ist, wobei der Versorgungsanschluss durch Schließen der Tür mit der gehäuseseitigen Milchleitung verbunden wird. Hierdurch muss ein dem Versorgungsanschluss zugewandtes Anschlussende der Milchleitung so ausgebildet und ausgerichtet sein, dass der Versorgungsanschluss am Ende der Verschwenkbewegung der Tür dichtend aufgenommen werden kann. Dies hat zur Folge, dass bei Heißgetränkezubereitungsvorrichtungen, die mit linksanschlagender oder alternativ rechtsanschlagender Tür angeboten werden sollen, jeweils eine unterschiedliche Konfiguration des gehäuseseitigen Milchleitungsendes notwendig ist, da der Versorgungsanschluss je nach Türanschlagsposition von der einen oder der anderen Richtung her beim Vorschwenken der Tür einen Radius beschreibt und so jeweils für eine der Anschlagsposition abgestimmte Ausrichtung des Milchleitungsanschlusses nicht für die jeweils alternative Türanschlagsposition zum Garantieren einer dichten Verbindung mit dem Versorgungsanschluss passend ist.

Die EP 2 196 118 B1 beschreibt eine Getränkezubereitungsvorrichtung mit Milchaufschäumer, wobei eine Milchleitung mittels eines translatorisch verstellbaren Andockelementes an- und abkoppelbar ist. Das Andockelement kontaktiert einen Versorgungsanschluss für Milch sowohl in einer Andockposition als auch in einer den Milchfluss unterbrechenden (abkoppelnden) Parkposition.

Die EP 2 407 068 A1 beschreibt eine Getränkezubereitungsvorrichtung mit abnehmbarem Milchbehälter.

Die DE 20 2012 009 075 U1 beschreibt ein Mehrwegeventil in einer Vorrichtung zur Milchaufschäumbereitung.

Ausgehend von dem vorgenannten Stand der Technik liegt der Erfindung die Aufgabe zugrunde, eine alternative Getränkezubereitungsvorrichtung anzugeben, die unabhängig von der Art und Weise der Positionierung und/oder einer etwaigen Verstellbewegung eines Versorgungsanschlusses für Milch eine fluiddichte Kopplung zwischen Milchleitung und Versorgungsanschluss sicherstellt. Insbesondere soll die Getränkezubereitungsvorrichtung für den bevorzugten, jedoch nicht notwendigerweise realisierbaren Fall einer türseitigen Anordnung des Versorgungsanschlusses alternativ mit rechtem oder linkem Türanschlag verwirklichbar sein, ohne dass eine Umkonfiguration der Milchleitungsposition im Gehäuse der Getränkezubereitungsvorrichtung notwendig ist. Bevorzugt ist die Getränkezubereitungsvorrichtung derart ausgestaltet, dass eine Kontamination der Milch in einen mit dem Versorgungsanschluss fluidleitend verbundenen Milchvorratsbehälter mit Spülmedium bzw. einem Spülvorgang der Milchleitung sicher vermieden wird. Ferner besteht die Aufgabe darin, ein optimiertes Betriebsverfahren für eine solche Getränkezubereitungsvorrichtung anzugeben.

Diese Aufgabe wird hinsichtlich der Getränkezubereitungsvorrichtung mit den Merkmalen des Anspruchs 1 gelöst, d.h. bei einer gattungsgemäßen Getränkezubereitungsvorrichtung dadurch, dass das Abdockelement in der Parkposition von dem Versorgungsanschluss beabstandet ist.

Hinsichtlich des Betriebsverfahrens wird die Aufgabe mit den Merkmalen des Anspruchs 12 gelöst, d.h. dadurch, dass das Andockelement zum fluidleitenden Verbinden der Milchleitung mit dem Versorgungsanschluss für Milch mittels des Antriebs zwischen der mindestens einen Parkposition und der mindestens einen davon beabstandeten Andockposition verstellt und dadurch an den Versorgungsanschluss angekoppelt wird und dass das Andockelement zum fluidischen Trennen der Milchleitung von dem Versorgungsanschluss aus der mindestens einen Andockposition in die mindestens eine Parkposition verstellt wird, in der es von dem Versorgungsanschluss beabstandet ist.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren angegebenen Merkmalen.

Zur Vermeidung von Wiederholungen sollen verfahrensgemäß offenbarte Merkmale auch als verfahrensgemäß offenbart gelten und beanspruchbar sein. Ebenso sollen verfahrensgemäß offenbarte Merkmale auch als vorrichtungsgemäß offenbart gelten und beanspruchbar sein.

Der Erfindung liegt der Gedanke zugrunde, der bevorzugt als Saugleitung ausgebildeten Milchleitung, über die die vorzugsweise eine mit Dampf speisbare Düsenanordnung aufweisende Einrichtung zum Erwärmen oder Aufschäumen von Milch mit Milch versorgbar ist, Andockmittel zuzuordnen bzw. fluidleitend mit diesen zu verbinden, wobei die Andockmittel ein mittels eines Antriebs, insbesondere eines Elektromotors, verstellbares Andockelement umfassen. Dieses Andockelement ist mittels des Elektromotors zwischen mindestens einer, insbesondere von dem Versorgungsanschluss für Milch beabstandeten Parkposition und mindestens einer, insbesondere entlang eines geradlinigen oder gekrümmten Verstellweges, beabstandeten Andockposition verstellbar, wobei das Andockelement in der Andockposition fluidleitend mit dem Versorgungsanschluss für Milch verbunden ist, so dass Milch über den Versorgungsanschluss in die Milchleitung und über diese in die Einrichtung zum Erwärmen und/oder Aufschäumen von Milch strömen kann.

In der mindestens einen Parkposition ist die vorerwähnte fluidleitende Verbindung unterbrochen, d.h. das Andockelement ist von dem Versorgungsanschluss abgekoppelt und beabstandet.

Die erfindungsgemäße Getränkezubereitungsvorrichtung ermöglicht es mit dem Andockelement aus mindestens einer Parkposition heraus mindestens eine Andockposition anzufahren, in welcher das Andockelement mit dem Versorgungsanschluss gekoppelt ist. Da das Andockelement in der mindestens einen Parkposition nicht fluidleitend mit dem Versorgungsanschluss verbunden, d.h. nicht mit diesem gekoppelt und bevorzugt von dem Versorgungsanschluss beabstandet ist, ist sichergestellt, dass bei einer Spülung der Milchleitung mit einem Spülmedium eine Kontamination von Milch in dem fluidleitend mit dem Versorgungsanschluss verbundenen Milchbehälter sicher verhindert wird, selbst für den Fall, dass das Andockelement selbst eine Undichtigkeit aufweisen sollte - aufgrund der Entkopplung und der bevorzugten Beabstandung kann bei einer erfindungsgemäß ausgestalteten Getränkezubereitungsvorrichtung jedenfalls kein Spülmedium aus dem in der mindestens einen Parkposition befindlichen Andockelement zum Versorgungsanschluss gelangen. Besonders bevorzugt ist es, wenn, wie später noch erläutert werden wird, die Andockmittel gleichzeitig die Funktion eines Fluidventils aufweisen, d.h. als Fluidventil ausgebildet sind und durch Verstellen des Andockelementes ein in die Andockmittel, insbesondere das Andockelement mündender Spülkanal mit der Milchleitung verbindbar oder fluidisch von dieser abtrennbar ist.

Aufgrund der erfindungsgemäßen Ausgestaltung der Getränkezubereitungsvorrichtung durch das Vorsehen von ein positionsveränderbares Andockelement aufweisenden Andockmitteln ist es zudem zur Garantie bzw. für die Herstellung einer dichten Verbindung zwischen dem Versorgungsanschluss und der Milchleitung unwesentlich, ob der Versorgungsanschluss dauerhaft fest so angeordnet ist, dass das Andockelement in seiner Andockposition mit dem Versorgungsanschluss koppelbar ist, oder ob der Versorgungsanschluss vor dem Verstellen des Andockelementes zunächst in diese Funktionsposition verstellt werden muss, insbesondere für den Fall, dass der Versorgungsanschluss an einer fakultativen Tür der Getränkezubereitungsvorrichtung angeordnet ist und durch Schließen der Tür in die Funktionsposition verstellbar ist oder wenn der Versorgungsanschluss fest mit einem austauschbaren Milchbehältnis gekoppelt ist und das Milchbehältnis über unterschiedliche Verstellwege an seine Position an der Getränkezubereitungsvorrichtung gebracht werden kann. Für den Fall der Anordnung des Versorgungsanschlusses an einer Tür, kann diese Tür alternativ mit Rechts- oder Linksanschlag realisiert werden, ohne dass eine Veränderung der Konfiguration der Andockmittel notwendig ist - es muss nur sichergestellt werden, dass der Versorgungsanschluss unabhängig von der Wahl des Türanschlags nach dem Schließen der Tür immer an der selben Funktionsposition angeordnet ist. Auf welchem Weg der Versorgungsanschluss in diese Position verstellt, insbesondere verschwenkt wird, ist jedoch aufgrund des Vorsehens des positionsveränderlichen Andockelementes gleichgültig, da hier erstmals aktiv aus Richtung der Milchleitung her mittels eines Antriebs eine Kopplungsposition angefahren wird, d.h. die endgültige Kopplung muss nicht zwingend von Seite des Versorgungsanschlusses für Milch her erfolgen, sondern es erfolgt maschinenseitig bzw. gehäuseseitig eine Ankopplung bzw. ein Andocken durch Verstellen des Andockelementes in mindestens eine Andockposition, also auf den Versorgungsanschluss zu. Bevorzugt ist der Versorgungsanschluss bzw. ist eine Versorgungsanschlussöffnung bei in der Parkposition befindlichem Andockelement offen.

Bevorzugt beträgt der Verstellweg zwischen mindestens einer Parkposition und mindestens einer Andockposition mindestens 0,5cm, ganz besonders bevorzugt 1cm. Ganz besonders bevorzugt ist der vorgenannte Verstellweg zwischen 0,5cm und 5cm gewählt.

Besonders zweckmäßig ist es, wenn das Andockelement, zumindest abschnittsweise zur Gewährleistung einer dichten, fluidleitenden Verbindung aus Elastomermaterial ausgebildet ist, um somit unmittelbar eine Abdichtfunktion für die Verbindung aus Andockelement und Versorgungsanschluss von Seiten des Andockelementes her zu übernehmen. Zudem ist es bei einer Ausbildung des Andockelementes aus Elastomermaterial auf einfache Weise möglich, durch Verwirklichung unterschiedlicher Relativpositionen des Andockelementes zu einem später noch zu erläuternden Kolben unterschiedliche Fluidwege freizuschalten, indem das als Elastomermaterial ausgebildete Andockelement positionsabhängig mit unterschiedlichen Stellen des Kolbens dichtend zusammenwirken kann.

Im Hinblick auf die konkrete Ausgestaltung der Einrichtung zum Erwärmen und/oder Aufschäumen von Milch gibt es unterschiedliche Möglichkeiten - grundsätzlich ist es möglich, die Milch mittels einer Pumpe durch eine Milchleitung zu fördern. Auch müssen die Erwärmungs- und/oder Aufschäummittel nicht zwingend auf Dampfbasis arbeiten, d.h. es können mechanisch arbeitende Aufschäummittel realisiert sein und/oder die Erwärmungsmittel können eine elektrische Heizung umfassen. Bevorzugt umfasst die Einrichtung zum Erwärmen und/oder Aufschäumen der Milch jedoch eine sogenannte Strahlpumpe, die mit einer Dampferzeugungseinrichtung der Getränkezubereitungsvorrichtung verbunden ist und mittels der bei Dampfdurchströmung ein Unterdruck erzeugt wird, mittels dem die Milch über die dann als Saugleitung ausgebildete Milchleitung und das in einer Andockposition befindliche Andockelement über den Versorgungsanschluss für Milch Milch aus einem Milchbehälter in einer Erwärmungs- und/oder Aufschäumkammer ansaugt, aus der dann erwärmte Milch oder für den Fall der Luftzugabe Milchschaum in ein Trinkbehältnis, insbesondere eine Kaffeetasse ausströmen kann. Für den Fall der Realisierung einer Einrichtung zum Erwärmen und Aufschäumen von Milch kann diese Einrichtung grundsätzlich zwei getrennte, insbesondere beabstandete Funktionseinheiten, nämlich eine Erwärmungseinheit und eine Aufschäumeinheit aufweisen, insbesondere für den Fall, dass das Aufschäumen mit Hilfe von mechanischen Aufschäummitteln und das Aufwärmen elektrisch oder mit Dampf erfolgt. Alternativ ist es möglich und bevorzugt, insbesondere dann, wenn das Erwärmen und Aufschäumen mittels Dampf durch den Einsatz einer Düse bzw. Strahlpumpe erfolgt, das Erwärmen und Aufschäumen in einer gemeinsamen Einheit realisiert ist, d.h. die Einrichtung zum Erwärmen und Aufschäumen eine (gemeinsame) Funktionseinheit aufweist, bzw. als solche realisiert ist.

Erfindungsgemäß wird zum Herstellen einer fluidleitenden Verbindung zwischen dem bevorzugt mit einem Milchbehältnis verbundenen und/oder lösbar verbindbaren Versorgungsanschluss und der Einrichtung zum Aufschäumen und/oder Erwärmen von Milch eine fluidleitende Verbindung hergestellt, in den aktiv mittels eines Antriebs, insbesondere eines Elektromotors ein Andockelement aus einer, bevorzugt von dem Versorgungsanschluss beabstandeten Parkposition in eine Andockposition verstellt wird, beispielsweise translatorisch und/oder durch eine Schwenkbewegung, wobei die Andockposition so gewählt ist, dass in dieser das Andockelement fluidleitend gekoppelt bzw. angedockt ist an den Versorgungsanschluss für Milch.

Zum Entkoppeln, d.h. zum Trennen der fluidleitenden Verbindung wird das Andockelement mittels des vorerwähnten Antriebs zurück in die mindestens eine Parkposition verstellt.

Grundsätzlich möglich ist eine Ausführungsvariante und liegt im Rahmen der Erfindung, bei der der Versorgungsanschluss fest relativ zum Gehäuse der Getränkezubereitungsvorrichtung positioniert ist, d.h. ohne Demontage seine Position nicht verändert werden kann. Bevorzugt ist jedoch eine alternative Ausführungsform, bei der der Versorgungsanschluss relativ zu der Andockposition verstellbar angeordnet ist, insbesondere indem der Versorgungsanschluss fest an einer relativ zu dem Gehäuse verstellbar, insbesondere verschwenkbar angeordneten Tür, positioniert ist und durch Verstellen der Tür relativ zu der mindestens einen Andockposition verstellt werden kann. Für den Fall der festen Anordnung des Versorgungsanschlusses an einer verstellbaren Tür der Getränkezubereitungsvorrichtung ist es bevorzugt, wenn an der Tür Kopplungsmittel vorgesehen sind, mit denen ein Milchbehälter der Getränkezubereitungsvorrichtung lösbar mit dem türfesten Versorgungsanschluss koppelbar ist. Alternativ ist es möglich, den Versorgungsanschluss fest an einem Milchbehältnis anzuordnen und somit den Versorgungsanschluss durch Positionieren des Milchbehältnisses relativ zum Gehäuse der Getränkezubereitungsvorrichtung zu positionieren. Denkbar ist auch alternativ eine Kombination, derart, dass der Versorgungsanschluss fest mit dem Milchbehälter verbunden ist, und der Milchbehälter an einer fakultativen Tür der Getränkezubereitungsvorrichtung anordnenbar ist und dass das Verstellen relativ zu der Andockposition durch Verstellen, insbesondere Verschwenken der fakultativen Tür erfolgt.

Wie eingangs bereits erwähnt, ist eine Ausführungsform besonders bevorzugt, bei der die Getränkezubereitungsvorrichtung eine Tür umfasst, die alternativ in einer Linksanschlags- oder Rechtsanschlagsposition montierbar ist, wobei der Versorgungsanschluss derart an der Tür angeordnet ist, dass dieser, unabhängig davon, ob die Tür mit Linksanschlag oder Rechtsanschlag montiert wird, bei geschlossener Tür immer in derselben (Funktionsposition) angeordnet ist, in der das Andockelement nach dem Verstellen in mindestens eine Andockposition fluidleitend mit dem Versorgungsanschluss verbunden ist. Bevorzugt ist ein freies Versorgungsanschlussende hierzu mittig bezogen auf die Türbreite angeordnet.

Bevorzugt fluchten in dieser Position der Versorgungsanschluss und ein bevorzugt translatorischer Verstellweg des Andockelementes in einer Verstellachse.

Im Hinblick auf die Art und Weise der Realisierung der, beispielsweise translatorischen oder alternativ beispielsweise rotatorisch oder führungskulissen geführten Verstellbewegung des Andockelementes zwischen der mindestens einen Parkposition und der mindestens einen Andockposition gibt es unterschiedliche Möglichkeiten. So ist es denkbar, den Antrieb, d.h. insbesondere den Elektromotor ortsfest anzuordnen und das Andockelement so mit dem Antrieb zu koppeln, dass dieses durch Betreiben des Antriebs relativ zu dem Antrieb verstellt wird. Besonders zweckmäßig und bevorzugt ist eine Ausführungsform, bei der das Andockelement fest mit dem Antrieb, insbesondere einem nicht rotierenden Abschnitt, insbesondere einem Gehäuseabschnitt des Antriebs verbunden ist und der Antrieb zusammen mit dem Andockelement bei Betrieb des Antriebs relativ bzw. entlang einer ortsfesten, insbesondere gehäusefesten Führung, beispielsweise einer Zahnstange oder einer Spindel, noch weiter bevorzugt translatorisch verstellbar ist.

Wie später noch erläutert werden wird, ermöglicht insbesondere eine derartige Konfiguration des Antriebs eine bevorzugte Ausführungsform, bei der das Andockelement zusammen mit dem Antrieb relativ zu einem ortfesten Kolben verstellbar ist, wobei durch Relativverstellen des Andockelementes relativ zu dem Kolben unterschiedliche Schaltzustände der dann bevorzugt als Fluidventil ausgebildeten Andockmittel realisierbar sind.

Besonders zweckmäßig ist eine Ausführungsform der Getränkezubereitungsvorrichtung, bei der die Andockmittel als Fluidventil ausgebildet sind, mit denen durch Verstellen des Andockelementes mindestens ein (zusätzlich zu dem Versorgungsanschluss vorgesehener) Kanal fluidleitend mit der Milchleitung verbindbar und von diesem fluidisch trennbar ist. Anders ausgedrückt ist ein solcher abhängig von der Position des Andockelementes der Andockmittel fluidleitend mit der Milchleitung verbunden oder nicht.

Wie später noch erläutert werden wird, handelt es sich bei einem solchen Kanal bevorzugt um einen Spülkanal zum Spülen des Saugkanals in der mindestens einen Parkposition des Andockelementes, d.h. in der Position, in der die Milchleitung nicht fluidleitend mit dem Versorgungsanschluss verbunden ist.

Wie zuvor bereits angedeutet, ist es besonders zweckmäßig, wenn das Andockelement relativ zu einem ortsfesten Kolben verstellbar ist. Hierzu ist das Andockelement bevorzugt als Andockhülse ausgebildet, in der der Kolben aufgenommen ist. Durch, insbesondere translatorisches Relativverstellen des Andockelementes relativ zu dem Kolben sind unterschiedliche Fluidventilstellungen der als Fluidventil ausgebildeten Andockmittel einstellbar, wobei hierzu das Andockelement in den unterschiedlichen Positionen an unterschiedlichen Stellen dichtend mit dem Kolben zusammenwirkt, um somit in den verschiedenen Relativpositionen verschiedene bzw. unterschiedliche Fluidwege freizuschalten. Anders ausgedrückt begrenzt das hülsenförmige Andockelement in den unterschiedlichen Relativpositionen zusammen mit dem Kolben unterschiedliche Fluidwege, wobei hierzu die Hülse an unterschiedlichen Positionen entlang ihrer Längserstreckung dichtend mit dem Kolben zusammenwirkt. Die vorerwähnten, unterschiedlichen Fluidwege sind dabei bevorzugt als Nuten oder Nutabschnitte am Außenumfang des Kolbens und/oder am Innenumfang der Hülse realisiert.

Ganz besonders bevorzugt ist eine Ausführungsform der Getränkezubereitungsvorrichtung, bei der der vorerwähnte Kolben in der mindestens einen Parkposition eine, insbesondere stirnseitige, Einlassöffnung (Andocköffnung) des Andockelementes von dem Kolben verschlossen ist. Mit anderen Worten kann auf zusätzlich zu dem Andockelement vorgesehene, aktiv bewegbare Verschlusselemente zum Verschließen der vorgenannten Einlassöffnung verzichtet werden, sondern die Einlassöffnung kann durch aktives Verstellen des Andockelementes relativ zu dem Kolben verschlossen werden, in dem in der Parkposition der Kolben zumindest in die Einlassöffnung hineinragt oder diese bevorzugt axial durchsetzt. Somit ist dann auch gewährleistet, dass die allermeisten, mit Milch kontaminierten Flächen in einer bevorzugten, später noch zu erläuternden Spülposition, in der ein Spülkanal fluidleitend mit der Milchleitung verbunden ist, gespült werden.

Wie bereits angedeutet, kann der in der Parkposition fluidleitend mit der Milchleitung verbundene Kanal als in die Andockmittel mündender Spülkanal ausgebildet sein, der mit Spülmedium versorgbar ist. Bei dem Spülmedium kann es sich um Wasser und/oder Dampf handeln. In der mindestens einen Andockposition ist der vorerwähnte Spülkanal durch die Relativpositionierung des Andockelementes zu dem Kolben fluidisch von der Milchleitung getrennt, um eine Kontamination der Milch mit Spülmedium zu vermeiden.

Grundsätzlich ist es möglich, für den Fall, dass mit der Getränkezubereitungsvorrichtung Milchschaum produziert wird, der Milch Luft an einer von den Andockmitteln unterschiedlichen Positionen zuzuführen, beispielsweise unmittelbar in die Milchleitung und/oder in eine eingangs erwähnte Misch- bzw. Aufschäumkammer. Besonders zweckmäßig ist nun einen Ausführungsform, bei der eine Luftleitung in die Andockmittel mündet, wobei die Luftleitung durch Verstellen des Andockelementes zwischen zwei unterschiedlichen, beabstandeten Andockpositionen öffnen- und schließbar ist. Anders ausgedrückt ist das Andockelement im Rahmen der Weiterbildung nicht nur eine einzige Andockposition verstellbar, sondern in zwei unterschiedliche, voneinander beabstandete Andockpositionen, nämlich eine Milcherwärmungsposition, wobei die Luftleitung aufgrund der Positionierung des Andockelementes in der Milchaufschäumposition geöffnet, d.h. fluidleitend bzw. luftleitend mit der Milchleitung verbunden ist und in der Milcherwärmungsposition verschlossen ist oder zumindest weniger weit geöffnet ist als in der Milchaufschäumposition.

Im Hinblick auf die Realisierung der voneinander beabstandeten Andockpositionen ist es von Vorteil, wenn ein Überdeckungsgrad zwischen dem Andockelement und dem Versorgungsanschluss in der Milchaufschäumposition und der Milcherwärmungsposition voneinander unterschiedlich ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: Ausschnittsweise eine nach dem Konzept der Erfindung ausgebildete Getränkezubereitungsvorrichtung,
- Fig. 2: Andockmittel der Getränkezubereitungsvorrichtung gemäß Fig. 1 mit einem in einer Parkposition befindlichen Andockelement,
- Fig. 3: die Andockmittel gemäß Fig. 2, wobei hier das Andockelement in einer ersten Andockposition (Milcherwärmungsposition) angeordnet ist,
- Fig. 4: die Andockmittel gemäß den Fig. 2 und 3 mit einem in einer zweiten, von der ersten Andockposition beabstandeten Andockposition (Milchaufschäumposition),
- Fig. 5: ein alternatives Ausführungsbeispiel von Andockmitteln, die zusätzlich in die eine Luftleitung mündet, die in einer in Fig. 5 gezeigten ersten Andockposition (Milcherwärmungsposition) fluidleitend von einer Milchleitung entkoppelt ist, und
- Fig. 6: die Andockmittel gemäß Fig. 5 in einer zweiten, von der ersten Andockposition axial beabstandeten Andockposition mit luftleitend mit der Milchleitung verbundener Luftleitung.

In den Figuren sind gleiche Elemente und Elemente mit der gleichen Funktion mit den gleichen Bezugszeichen gekennzeichnet.

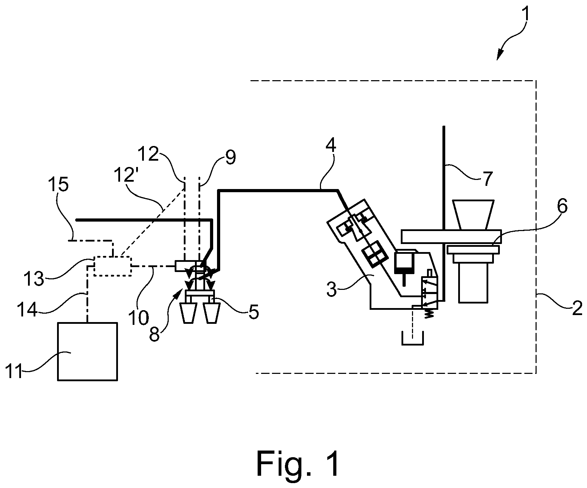

In Fig. 1 ist eine hier lediglich beispielhaft als Kaffeevollautomat ausgebildete Getränkezubereitungsvorrichtung 1 ausschnittsweise dargestellt. Alternativ zu einem Kaffeevollautomaten kann die Getränkezubereitungsvorrichtung auch als Portionseinheitenmaschine, insbesondere Kaffeekapselmaschine ausgebildet sein. Auch muss es sich nicht zwingend um eine Kaffeemaschine handeln - es muss lediglich die Funktionalität zur Erwärmung und/oder zum Aufschäumen von Milch gegeben sein.

Die Getränkezubereitungsvorrichtung 1 umfasst ein Gehäuse 2. In dem Gehäuse 2 befindet sich je eine Brüheinheit 3 zur Herstellung von Kaffee, der über eine Getränkeleitung 4 einem Auslass 5 zuführbar ist. In dem konkreten Ausführungsbeispiel wird der Kaffee gebrüht auf Basis von Kaffeemehl, welches mit einer integralen Kaffeemühle 6 erzeugbar ist. Bei einer alternativen Ausgestaltung als Portionseinheitenmaschine, wird das Kaffeemehl mittels einer Portionseinheit, insbesondere einer Kapsel zugeführt.

Wie aus Fig. 1 weiter zu erkennen ist, mündet in die Brüheinheit 3 eine Heißwasserleitung 7, über die der Brüheinheit 3 Heißwasser zugeführt wird, welches in einem nicht gezeigten Durchlauferhitzer in an sich bekannter Weise erhitzt wird.

Weiter ist zu erkennen, dass die Getränkezubereitungsvorrichtung 1 eine Einrichtung 8 zum Erwärmen und/oder Aufschäumen von Milch aufweist. Diese nicht im Detail dargestellte, an sich bekannte Einrichtung 8 umfasst eine Düsenanordnung mit einer Treibdüse bzw. Strahlpumpe, die mit Dampf aus einer Dampfleitung 9 zur Erzeugung von Unterdruck und zum Erwärmen und/oder Aufschäumen von Milch versorgbar ist. Der Dampf kann je nach Ausgestaltung der Getränkezubereitungsvorrichtung in dem selben Durchlauferhitzer hergestellt werden, wie das Heißwasser zur Versorgung der Brüheinheit 3. Auch ist es denkbar, einen zusätzlichen Dampferzeuger vorzusehen. Die Einrichtung 8 wird mit Milch über eine Milchleitung 10 versorgt, über die durch den vorerwähnten Unterdruck Milch aus einem entnehmbaren Milchbehälter 11 der Getränkezubereitungsvorrichtung 1 bzw. des Getränkezubereitungsvorrichtungssystems angesaugt werden kann.

In die Milchleitung 10 kann gemäß einer ersten Ausführungsvariante, hier beispielhaft im Bereich der Einrichtung 8 Luft über eine Luftleitung 12 zugeführt werden. Eine alternative Luftleitungsführung 12' ist strichliert dargestellt. Hier mündet die Luftleitung 12' unmittelbar in später noch zu erläuternde Andockmittel 13 und kann bei einer vorteilhaften Ausgestaltung der Erfindung mit diesen freigeschaltet oder gesperrt werden.

Mit Hilfe der Andockmittel 13, die fluidleitend fest mit der Milchleitung 10 verbunden sind, kann eine fluidleitende Verbindung zu einem, insbesondere türseitigen oder milchbehälterseitigen Versorgungsanschluss 14 hergestellt werden, indem ein nicht gezeigtes Andockelement der Andockmittel 13 zwischen einer Parkposition und mindestens einer Andockposition mittels eines insbesondere elektromotorischen Antriebs verstellt wird.

In die Andockmittel 13 mündet ein hier als Spülkanal ausgebildeter Kanal 15, über den in einer Parkposition des vorerwähnten Andockelementes die Andockmittel mit Spülmedium, insbesondere Heißwasser und/oder Dampf gespült werden können, wobei der Kanal 15 in der vorerwähnten Andockposition bedingt durch die Relativposition des Andockelementes von der Milchleitung 10 abgekoppelt ist, mit welcher er in der Parkposition gekoppelt ist.

Alternativ zur Ausbildung des Spülkanals als aktiver Zuleitungskanal zur Versorgung der Andockmittel mit Spülmedium kann der Kanal auch als Ableitungskanal dienen zum Ausleiten von Spülmedium aus den Andockmitteln, für einen alternativen Fall nach welchem die Andockmittel über die Milchleitung gespült werden - in diesem Fall erfolgt die Zuleitung von Spülmedium bevorzugt in einem Bereich zwischen den Andockmitteln und der Einrichtung zum Erwärmen und/oder Aufschäumen von Milch, beispielsweise über einen Luftkanal oder einen separaten Spülkanal.

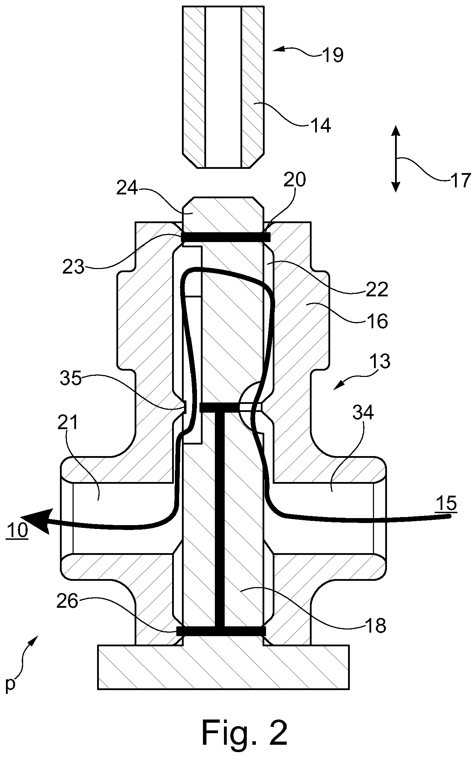

Fig. 2. zeigt nun eine mögliche Ausgestaltungsvariante von Andockmitteln 13. Diese umfassen, wie erwähnt, ein, hier beispielhaft aus einem Elastomermaterial ausgebildetes Andockelement 16, welches mittels eines nicht dargestellten, insbesondere elektromotorischen Antrieb verstellbar ist - in dem konkreten Ausführungsbeispiel rein translatorisch entlang einer axialen Verstellachse 17. Hierzu ist das Andockelement 16 bevorzugt fest mit dem Antrieb verbunden und zusammen mit dem Antrieb relativ zu einer nicht gezeigten Führung verstellbar. Diese Führung ist dann ortsfest angeordnet, ebenso wie ein im Folgenden noch zu erläuternder Kolben 18, welcher sich zumindest abschnittweise im Inneren des hülsenförmigen Andockelementes 16 befindet und zusammen mit diesem in Abhängigkeit von der Relativposition zwischen Andockelement 16 und Kolben 18 unterschiedliche Fluidwege begrenzt.

Wesentlich ist, dass das Andockelement 16 positionsveränderbar ist relativ zu dem Versorgungsanschluss 14, welcher beispielsweise fest an einem Milchbehälter angeordnet ist oder an einer fakultativen, insbesondere verschwenkbar angeordnet Tür. Um eine Kopplung mit diesem Versorgungsanschluss 14 herzustellen, muss sich dieser in der gezeigten Funktionsposition 19 befinden. Je nach Ausgestaltung der Getränkezubereitungsvorrichtung 1 befindet sich der dann nicht verstellbare Versorgungsanschluss dauerhaft in dieser Funktionsposition. Besonders bevorzugt ist es, wenn der Versorgungsanschluss 14 zunächst in diese Funktionsposition verstellt werden muss, insbesondere durch Verschwenken der erwähnten Tür.

Fig. 2 zeigt nun einen Betriebszustand bzw. eine Ventilstellung der als Fluidventil ausgebildeten Andockmittel 13, bei der das Andockelement 16 axial von dem Versorgungsanschluss 14 beabstandet und nicht fluidleitend mit diesem verbunden ist. Eine stirnseitige Einlassöffnung 20 der Andockmittel 13 ist mittels des Kolbens 18 verschlossen, in dem dieser in die Einlassöffnung 20 hineinragt.

In der dargestellten Parkposition P ist ein hier als Spülkanal ausgebildeter Kanal 15 fluidleitend mit einem Milchanschluss 21 (Andockelementauslass) der Andockmittel 13 und damit mit der Milchleitung 10 verbunden. Der Kanal 15 ist mit einem Kanalanschluss 34 der Andockmittel 13, genauer des Andockelementes 16 verbunden. Wird nun über den Kanal 15 Spülmedium zugeführt, gelangt dieses in eine von dem Kolben 18 und dem Andockelement 16 begrenzte Ventilkammer 22 und strömt über diese in die Milchleitung 10. Ein umgekehrter Fluidfluss ist alternativ realisierbar.

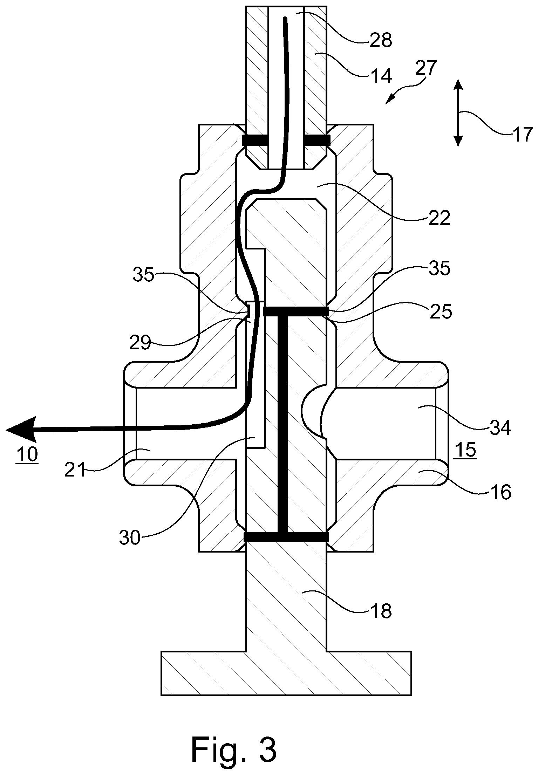

Zu erkennen ist, dass das Andockelement verschiedene Dichtabschnitte aufweist, nämlich einen vorderen Dichtabschnitt 35, der die Einlassöffnung 20 begrenzt, und der in der Parkposition dichtend mit einem vorderen Zylinderabschnitt 24 des Kolbens zusammenwirkt. Ferner ist ein mittlerer Dichtabschnitt 23 vorgesehen, mit welchem der Kanal 15 durch Zusammenwirken mit einem Gegenabschnitt 25 des Kolbens 18 (vgl. Fig. 3) fluidisch von der Milchleitung 10 trennbar ist.

Zudem umfassen die Andockmittel 13 noch einen hinteren Dichtabschnitt 26, zum Abdichten der Ventilkammer 22 in der Zeichnungsebene nach unten bzw. nach hinten. Bei einer alternativen, später noch zu erläuternden Ausführungsform kann mit dem hinteren Dichtabschnitt 26 (oder ein anderer Dichtabschnitt) auch noch eine fakultative Luftleitung freigeschaltet oder versperrt werden.

In Fig. 3 ist zu erkennen, dass im Vergleich zu Fig. 2 das Andockelement 16 translatorisch entlang der Verstellachse 16 nach vorne in Richtung Versorgungsanschluss 14 verstellt wurde. Das Andockelement 16 befindet sich in einer ersten Andockposition 27 von insgesamt zwei Andockpositionen. In der ersten Andockposition 27 ragt der Versorgungsanschluss 14 in das Andockelement 16 hinein, so dass die Milchzuleitung 28 des Andockelementes in die Ventilkammer 22 mündet. Gleichzeitig wirkt der mittlere Dichtabschnitt 24 so mit dem Kolben 18 zusammen, dass der Kanal 15 von der Milchleitung 10 bzw. dem als Sauganschluss ausgebildeten Milchanschluss 21 (Andockelementauslass) entkoppelt ist. Es besteht eine fluidleitende Verbindung zwischen dem Versorgungsanschluss 14 und der Milchleitung 10. Die Milch kann in axialer Richtung radial zwischen Kolben 18 und Innenumfang des Andockelementes 16 hin zur Milchleitung 10 strömen. Dabei wird der freie Durchflussquerschnitt für Milch verengt, da die Milch durch einen verengten Nutabschnitt 29 einer im Außenumfang des Kolbens 18 vorgesehenen Nut strömen muss. Hierzu begrenzen die mittleren Dichtmittel 24 mit dem verengten Nutabschnitt 29 der Nut 30 den vorerwähnten verringerten Querschnitt. Alternativ kann selbstverständlich auch eine solche verengte Nut am Innenumfang des Andockelementes 16 vorgesehen werden, wobei dann auch der Kolben 18 mit diesem verengten Nutquerschnitt den reduzierten freien Milchdurchflussquerschnitt begrenzt.

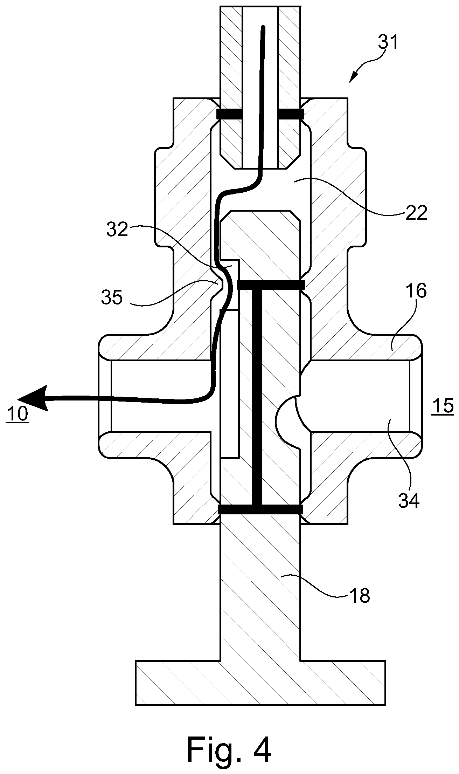

In Fig. 4 ist das Andockelement 16 noch weiter nach vorne verfahren und befindet sich in einer zweiten Andockposition 31. In dieser ist selbstverständlich der Kanal 15 immer noch von der Milchleitung 10 entkoppelt. Wesentlicher Unterschied ist, dass der mittlere Dichtabschnitt 24 nun mit einem verbreiterten Nutabschnitt 32 des Kolbens 18 zusammenwirkt, so dass ein verbreiterter bzw. größerer freier Milchdurchflussquerschnitt freigeschaltet ist und somit bei angenommenen gleichen Saugdruck mehr Milch pro Zeiteinheit angesaugt werden kann. Dies ist wünschenswert für die Herstellung von Milchschaum. Bei dem gezeigten Ausführungsbeispiel wird der Milchleitung 10 an anderer Stelle Luft in an sich bekannter Weise zugeführt, um dann in der Milchkammer der Einrichtung 8 (vgl. Fig. 1) Milchschaum zu erzeugen.

Zu erkennen ist, dass der Überdeckungsgrad zwischen Andockelement 16 und Verbindungsanschluss 14 in den unterschiedlichen Andockpositionen 27, 31 unterschiedlich ist - konkret ist hier die axiale Überdeckung in der zweiten Andockposition 31 größer.

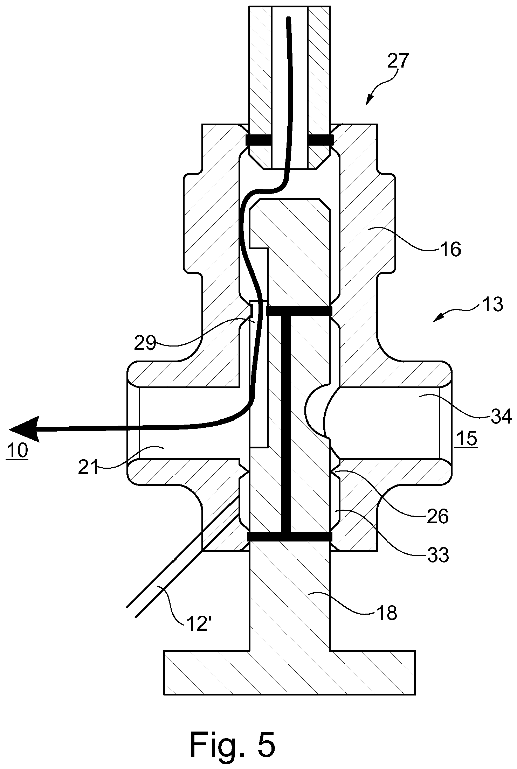

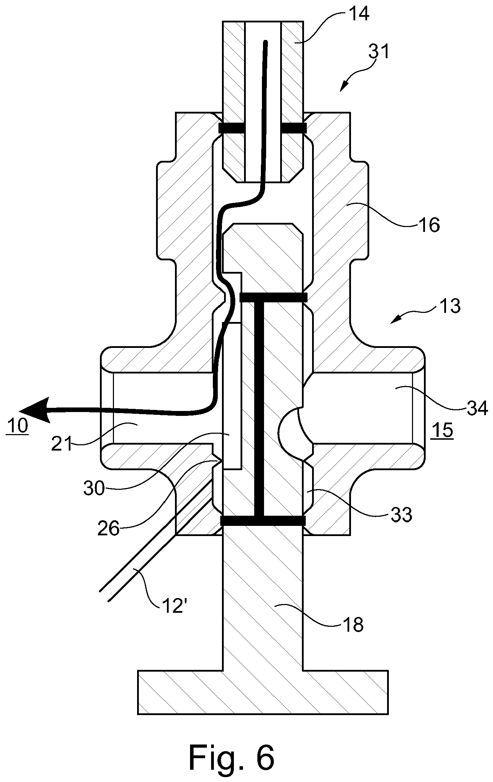

Fig. 5 und Fig. 6 zeigen eine alternative Ausführungsform der Andockmittel 13, wobei zur Vermeidung von Wiederholungen im Wesentlichen auf die Unterschiede zu dem voranstehend erläuterten Ausführungsbeispiel eingegangen wird. Im Hinblick auf die Gemeinsamkeiten, wird auf die Figuren 2 bis 4 mit zugehöriger Figurenbeschreibung verwiesen.

Fig. 5 zeigt das Andockelement 16 in der ersten Andockposition 27, in der Milch durch den verengten Nutquerschnitt 29 des Kolbens 18 strömen muss. Der Kanal 15 ist nicht fluidleitend mit der Milchleitung 10 verbunden.

Im Unterschied zu dem vorstehend erläuterten Ausführungsbeispiel mündet hier in die Andockmittel 13, genauer das Andockelement 16 eine Luftleitung 12', einen hinteren Ventilraum 33, der von dem Kolben 18 und dem Andockelement 16 begrenzt ist. Der hintere Dichtabschnitt 26 des Andockelementes 13 dichtet die hintere Ventilkammer gegenüber der Milchleitung 10 ab. Es wird Milch nur erwärmt, nicht aufgeschäumt.

In Fig. 6 befindet sich das Andockelement 16 wieder in seiner zweiten Andockposition 31. Hier ist nun die hintere Ventilkammer 33 luftleitend über die Nut 30 mit der Milchleitung 10 verbunden, so dass nicht nur Milch über den Versorgungsanschluss 14, sondern auch Luft über die Luftleitung 12' angesaugt werden kann. Zu erkennen ist, dass für die Freischaltung der Luftleitung 12' wiederum die Relativposition zwischen Andockelement 16 und Kolben 18 verantwortlich ist. Der hintere Dichtabschnitt 26 befindet sich nun unmittelbar radial benachbart zur Nut 30.

Selbstverständlich sind auch alternative Anordnungen der Luftleitung und der Dichtabschnitte möglich. Es können auch unterschiedliche Anzahlen von Dichtabschnitten vorgesehen werden, um weitere oder weniger Funktionalitäten zu realisieren.

### Bezugszeichenliste

- 1: Getränkezubereitungsvorrichtung
- 2: Gehäuse
- 3: Brüheinheit
- 4: Getränkeleitung
- 5: Auslass
- 6: Kaffeemühle
- 7: Heißwasserleitung
- 8: Einrichtung zum Erwärmen und/oder Aufschäumen von Milch
- 9: Dampfleitung
- 10: Milchleitung
- 11: Milchbehälter
- 12: Luftleitung
- 12': Luftleitung
- 13: Andockmittel
- 14: Versorgungsanschluss
- 15: Kanal
- 16: Andockelement
- 17: Verstellachse
- 18: Kolben
- 19: Funktionsposition
- 20: Einlassöffnung
- 21: Milchanschluss (Andockelementauslass)
- 22: Ventilkammer
- 23: vorderer Dichtabschnitt
- 24: vorderer Zylinderabschnitt
- 25: Gegenabschnitt
- 26: hinterer Dichtabschnitt
- 27: erste Andockposition
- 28: Milchzuleitung
- 29: Nutquerschnitt
- 30: Nut
- 31: zweite Andockposition
- 32: verbreiterter Nutabschnitt
- 33: hinterer Ventilraum
- 34: Kanalanschluss
- 35: mittlerer Dichtabschnitt

- P: Parkposition

## Patentansprüche

1. Getränkezubereitungsvorrichtung mit einem Gehäuse (2) und mit einer Einrichtung (8) zum Erwärmen und/oder Aufschäumen von Milch und mit einer Milchleitung (10), über die die Einrichtung (8) zum Erwärmen und/oder Aufschäumen von Milch mit Milch versorgbar ist, wobei die Milchleitung (10) fluidleitend mit Andockmitteln (13) verbunden ist, die ein mittels eines Antriebs, insbesondere eines Elektromotors, zwischen mindestens einer Parkposition und mindestens einer davon beabstandeten Andockposition (27, 31) verstellbares Andockelement (16) umfassen, dass in der Andockposition (27, 31) fluidleitend mit einem Versorgungsanschluss (14) für Milch verbunden und in der Parkposition von diesem abgekoppelt ist,
**dadurch gekennzeichnet,**
**dass** das Andockelement (16) in der Parkposition von dem Versorgungsanschluss (14) beabstandet ist.

2. Getränkezubereitungsvorrichtung nach Anspruch 1,
**dadurch gekennzeichnet,**
**dass** der Versorgungsanschluss (14) relativ zu der Andockposition (27, 31) verstellbar angeordnet ist.

3. Getränkezubereitungsvorrichtung nach Anspruch 2,
**dadurch gekennzeichnet,**
**dass** der Versorgungsanschluss (14) an einer relativ zu dem Gehäuse (2) verstellbaren, insbesondere verschwenkbaren, bevorzugt Andockmittel (13) für einen Milchvorratsbehälter aufweisenden, Tür der Getränkezubereitungsvorrichtung (1) und/oder an einem entnehmbaren Milchvorratsbehälter der Getränkezubereitungsvorrichtung (1) angeordnet ist.

4. Getränkezubereitungsvorrichtung nach Anspruch 3,
**dadurch gekennzeichnet,**
**dass** der Versorgungsanschluss (14) derart an der Tür angeordnet ist, dass dieser unabhängig von einer Links- oder Rechtsanschlagmontage der Tür bei geschlossener Tür derart angeordnet ist, dass das Andockelement (16) in seiner Andockposition (27, 31) fluidleitend mit dem Versorgungsanschluss (14) verbunden ist.

5. Getränkezubereitungsvorrichtung nach einem der vorhergehenden Ansprüche,
**dadurch gekennzeichnet,**
**dass** das Andockelement (16) fest mit Antrieb verbunden und zum Verstellen zwischen der mindestens einen Parkposition und der mindestens einen Andockposition (27, 31) zusammen mit dem Antrieb entlang einer ortsfesten Führung, insbesondere einer Zahnstange oder einer Spindel, bevorzugt translatorisch verstellbar ist.

6. Getränkezubereitungsvorrichtung nach einem der vorhergehenden Ansprüche,
**dadurch gekennzeichnet,**
**dass** die Andockmittel (13) als Fluidventil ausgebildet sind, mit denen durch Verstellen des Andockelementes (16) mindestens ein Kanal (15) fluidleitend mit dem Saugkanal verbindbar und von diesem fluidisch trennbar ist.

7. Getränkezubereitungsvorrichtung nach Anspruch 6,
**dadurch gekennzeichnet,**
**dass** das Andockelement (16) als Andockhülse ausgebildet ist, in der ein, bevorzugt ortsfest angeordneter, Kolben (18) aufgenommen ist und dass durch, bevorzugt translatorisches, Relativverstellen des Andockelements (16) relativ zu dem Kolben (18) unterschiedliche Fluidventilstellungen einstellbar sind, insbesondere in dem das Andockelement (16) durch dichtendes Zusammenwirken mit dem Kolben (18) in den unterschiedlichen Relativpositionen zusammen mit dem Kolben (18) unterschiedliche Fluidwege begrenzt.

8. Getränkezubereitungsvorrichtung nach Anspruch 7,
**dadurch gekennzeichnet,**
**dass** der Kolben (18) derart mit dem Andockelement (16) zusammenwirkend ausgebildet und angeordnet ist, dass durch Verstellen des Andockelementes (16) in die mindestens eine Parkposition eine Einlassöffnung (20) des Andockelementes (16) von dem Kolben (18) verschließbar ist.

9. Getränkezubereitungsvorrichtung nach einem der Ansprüche 6 bis 8,
**dadurch gekennzeichnet,**
**dass** das Fluidventil derart ausgebildet ist, dass in der Parkposition ein in die Andockmittel (13) mündender, bevorzugt mit Wasser und/oder Dampf versorgbarer, als Spülkanal ausgebildeter, fluidleitend mit der Milchleitung (10) verbunden und durch Verstellen des Andockelementes (16) in die Andockposition (27, 31) fluidisch von der Milchleitung (10) trennbar ist.

10. Getränkezubereitungsvorrichtung nach einem der Ansprüche 6 bis 9,
**dadurch gekennzeichnet,**
**dass** das Fluidventil derart ausgebildet ist, dass dieses zwischen zwei Andockpositionen (27, 31) verstellbar ist, nämlich einer Milchaufschäumposition und einer Milcherwärmungsposition, in denen das Andockelement (16) den Versorgungsanschluss (14) fluidleitend mit der Milchleitung (10) verbindet und dass in der Milchaufschäumposition eine in die Andockmittel (13) mündende Luftleitung (12') geöffnet ist und somit Luft in einen angesaugten Milchstrom eintragbar, insbesondere einsaugbar, ist und dass der Luftanschluss durch Verstellen des Andockelementes (16) in die Milcherwärmungsposition schließbar oder zumindest ein freier Querschnitt für Luft verengbar ist.

11. Getränkezubereitungsvorrichtung nach Anspruch 10,
**dadurch gekennzeichnet,**
**dass** ein Überdeckungsrad zwischen dem Andockelement (16) und dem Versorgungsanschluss (14) in der Milchaufschäumposition und der Milcherwärmungsposition unterschiedlich ist.

12. Verfahren zum Betreiben einer Getränkezubereitungsvorrichtung nach einem der vorhergehenden Ansprüche,
dass das Andockelement (16) zum fluidleitenden Verbinden der Milchleitung (10) mit dem Versorgungsanschluss (14) für Milch mittels des Antriebs, insbesondere des Elektromotors, zwischen der mindestens einen Parkposition und der mindestens einen davon beabstandeten Andockposition (27, 31) verstellt und an den Versorgungsanschluss (14) angekoppelt wird und dass das Andockelement (16) zum fluidischen Trennen der Milchleitung (10) von dem Versorgungsanschluss (14) aus der mindestens einen Andockposition (27, 31) in die mindestens eine, Parkposition verstellt wird, in der es von dem Versorgungsanschluss beabstandet ist.

13. Verfahren nach Anspruch 12,
**dadurch gekennzeichnet,**
**dass** vor dem Verstellen des Andockelementes (16) in die mindestens eine Andockposition (27, 31) der Versorgungsanschluss (14) in eine Funktionsposition, insbesondere durch Schließen einer den Versorgungsanschluss (14) aufweisenden Tür, verstellt wird, in der das Andockelement (16) in seiner Andockposition (27, 31) an den Versorgungsanschluss (14) andockbar und/oder angedockt ist.

## Claims

1. A beverage preparation device comprising a housing (2) and a mechanism (8) for heating and/or frothing milk and a milk conduit (10) via which the mechanism (8) for heating and/or frothing milk is suppliable with milk, the milk conduit (10) being in fluid communication with docking means (13) comprising a docking element (16) which is displaceable between at least one parking position and at least one docking position (27, 31) spaced apart therefrom by means of a drive, in particular an electric motor, and which is in fluid communication with a supply connection (14) for milk when in the docking position (27, 31) and decoupled therefrom when in the parking position,
**characterized in that**
the docking element (16) is spaced apart from the supply connection (14) when in the parking position.

2. The beverage preparation device according to claim 1,
**characterized in that**
the supply connection (14) is displaceable relative to the docking position (27, 31).

3. The beverage preparation device according to claim 2,
**characterized in that**
the supply connection (14) is disposed on a door of the beverage preparation device (1), said door being displaceable, in particular pivotable, relative to the housing (2) and preferably having docking means (13) for a milk container, and/or on a removable milk container of the beverage preparation device (1).

4. The beverage preparation device according to claim 3,
**characterized in that**
the supply connection (14) is disposed on the door in such a manner that irrespective of a left-hand or right-hand swing of the door, the supply connection (14) is disposed in such a manner when the door is closed that the docking element (16) is in fluid communication with the supply connection (14) when in its docking position.

5. The beverage preparation device according to any one of the preceding claims,
**characterized in that**
the docking element (16) is permanently connected to the drive and is displaceable together with the drive, preferably translationally, along a fixed guide, in particular a toothed rack or spindle, so as to be displaced between the at least one parking position and the at least one docking position (27, 31).

6. The beverage preparation device according to any one of the preceding claims,
**characterized in that**
the docking means (13) are realized as fluid valves by means of which fluid communication between at least one channel (15) and the suction channel is establishable or interruptible by displacement of the docking element (16).

7. The beverage preparation device according to claim 6,
**characterized in that**
the docking element (16) is realized as a docking sleeve in which a preferably fixed piston (18) is accommodated, and **in that** different fluid valve positions are settable by preferably translationally displacing the docking element (16) relative to the piston (18), in particular by the docking element (16) defining different fluid paths together with the piston (18) in the different relative positions through sealing interaction with the piston (18).

8. The beverage preparation device according to claim 7,
**characterized in that**
the piston (18) is disposed and designed to interact with the docking element (16) in such a manner that an inlet opening (20) of the docking element (16) is closable by the piston (18) by displacing the docking element (16) into the at least one parking position.

9. The beverage preparation device according to any one of claims 6 to 8,
**characterized in that**
the fluid valve is designed in such a manner that, when in the parking position, a channel (15) which ends in the docking means (13) and which is preferably supplied with water and/or steam and which is designed as a rinsing channel is in fluid communication with the milk conduit (10) and its fluid communication with the milk conduit (10) is interruptible by displacing the docking element (16) into the docking position (27, 31).

10. The beverage preparation device according to any one of claims 6 to 9,
**characterized in that**
the fluid valve is designed in such a manner that it is displaceable between two docking positions (27, 31), namely a milk frothing position and a milk heating position, in which the docking element (16) establishes fluid communication between the supply connection (14) and the milk conduit (10), and **in that** in the milk frothing position, an air conduit (12') ending in the docking means (13) is open, which allows air to be introduced, in particular aspirated, into an aspirated milk flow, and **in that** the air connection is closable or a free cross-section for air is at least narrowable by displacing the docking element (16) into the milk heating position.

11. The beverage preparation device according to claim 10,
**characterized in that**
a degree of overlap between the docking element (16) and the supply connection (14) in the milk frothing position differs from a degree of overlap in the milk heating position.

12. A method for operating a beverage preparation device according to any one of the preceding claims,
**characterized in that**
for fluid communication to be established between the milk conduit (10) and the supply connection (14) for milk, the docking element (16) is displaced between the at least one parking position and the at least one docking position (27, 31) spaced apart therefrom by means of the drive, in particular the electric motor, and is coupled to the supply connection (14), and **in that** the docking element (16) is displaced from the at least one docking position (27, 31) into the at least one parking position, in which it is spaced apart from the supply connection, in order to interrupt the fluid communication between the milk conduit (10) and the supply connection (14).

13. The method according to claim 12,
**characterized in that**
before the docking element (16) is displaced into the at least one docking position (27, 31), the supply connection (14) is displaced, in particular by closing a door having the supply connection (14), into a functional position in which the docking element (16) is dockable and/or docked to the supply connection (14) when in its docking position (27, 31).

## Revendications

1. Dispositif de préparation de boissons comprenant un boîtier (2) et un mécanisme (8) de chauffage et/ou de moussage de lait et un tuyau à lait (10) par lequel le mécanisme (8) de chauffage et/ou de moussage de lait peut être alimenté en lait, le tuyau à lait (10) étant en communication fluidique avec des moyens d'accouplement (13) comprenant un élément d'accouplement (16) qui est déplaçable entre au moins une position de parking et au moins une position d'accouplement (27, 31) espacée de celle-ci au moyens d'un dispositif d'entraînement, notamment un moteur électrique, et qui est en communication fluidique avec un raccord d'alimentation (14) en lait dans la position d'accouplement (27, 31) et découplé de celui-ci dans la position de parking,
**caractérisé en ce que**
l'élément d'accouplement (16) est espacé du raccord d'alimentation (14) dans la position de parking.

2. Dispositif de préparation de boissons selon la revendication 1,
**caractérisé en ce que**
le raccord d'alimentation (14) est déplaçable par rapport à la position d'accouplement (27, 31).

3. Dispositif de préparation de boissons selon la revendication 2,
**caractérisé en ce que**
le raccord d'alimentation (14) est disposé sur une porte du dispositif de préparation de boissons (1), ladite porte étant déplaçable, notamment pivotable, par rapport au boîtier (2) et ayant de préférence des moyens d'accouplement (13) pour un réservoir de lait, et/ou sur un réservoir de lait amovible du dispositif de préparation de boissons (1).

4. Dispositif de préparation de boissons selon la revendication 3,
**caractérisé en ce que**
le raccord d'alimentation (14) est disposé sur la porte de telle manière qu'indépendamment d'un sens d'ouverture de la porte, il est disposé de telle manière lorsque la porte est fermée que l'élément d'accouplement (16) est en communication fluidique avec le raccord d'alimentation (14) dans sa position d'accouplement.

5. Dispositif de préparation de boissons selon l'une quelconque des revendications précédentes,
**caractérisé en ce que**
l'élément d'accouplement (16) est solidaire du dispositif d'entraînement et déplaçable conjointement avec le dispositif d'entraînement, de préférence en translation, le long d'un guide fixe, notamment une crémaillère ou une broche, afin d'être déplacé entre l'au moins une position de parking et l'au moins une position d'accouplement (27, 31).

6. Dispositif de préparation de boissons selon l'une quelconque des revendications précédentes,
**caractérisé en ce que**
les moyens d'accouplement (13) sont réalisés comme soupapes de fluides par lesquelles la communication fluidique entre au moins un canal (15) et le canal d'aspiration peut être établie ou interrompue en déplaçant l'élément d'accouplement (16).

7. Dispositif de préparation de boissons selon la revendication 6,
**caractérisé en ce que**
l'élément d'accouplement (16) est réalisé comme douille d'accouplement dans laquelle un piston (18) de préférence fixe est logé, et **en ce que** des positions de soupape de fluide différentes sont réglables en déplaçant, de préférence en translation, l'élément d'accouplement (16) par rapport au piston (18), notamment par l'élément d'accouplement (16) définissant des voies de fluide différentes conjointement avec le piston (18) dans les positions relatives différentes en interagissant de manière étanche avec le piston (18).

8. Dispositif de préparation de boissons selon la revendication 7,
**caractérisé en ce que**
le piston (18) est disposé et configuré pour interagir avec l'élément d'accouplement (16) de telle manière qu'une ouverture d'entrée (20) de l'élément d'accouplement (16) peut être fermée par le piston (18) en déplaçant l'élément d'accouplement (16) dans l'au moins une position de parking.

9. Dispositif de préparation de boissons selon l'une quelconque des revendications 6 à 8,
**caractérisé en ce que**
la soupape de fluide est configurée de telle manière que dans la position de parking, un canal (15) qui débouche dans les moyens d'accouplement (13) et qui est de préférence alimenté en eau et/ou vapeur et configuré comme canal de lavage est en communication fluidique avec le tuyau à lait (10) et sa communication fluidique avec le tuyau à lait (10) peut être interrompue en déplaçant l'élément d'accouplement (16) dans la position d'accouplement (27, 31).

10. Dispositif de préparation de boissons selon l'une quelconque des revendications 6 à 9,
**caractérisé en ce que**
la soupape de fluide est configurée de telle manière qu'elle est déplaçable entre deux positions d'accouplement (27, 31), à savoir une position de moussage de lait et une position de chauffage de lait, dans lesquelles l'élément d'accouplement (16) met le raccord d'alimentation (14) en communication fluidique avec le tuyau à lait (10), et **en ce que** dans la position de moussage de lait, un tuyau à air (12') débouchant dans les moyens d'accouplement (13) est ouvert, ce qui permet à l'air d'être introduit, notamment aspiré, dans un écoulement de lait aspiré, et **en ce que** le raccord d'air peut être fermé ou une section libre pour l'air peut au moins être rétrécie en déplaçant l'élément d'accouplement (16) dans la position de chauffage de lait.

11. Dispositif de préparation de boissons selon la revendication 10,
**caractérisé en ce**
**qu'**un degré de chevauchement entre l'élément d'accouplement (16) et le raccord d'alimentation (14) dans la position de moussage de lait est différent d'un degré de chevauchement dans la position de chauffage de lait.

12. Procédé de fonctionnement d'un dispositif de préparation de boissons selon l'une quelconque des revendications précédentes,
**caractérisé en ce**
**qu'**afin de mettre le tuyau à lait (10) en communication fluidique avec le raccord d'alimentation (14) en lait, l'élément d'accouplement (16) est déplacé entre l'au moins une position de parking et l'au moins une position d'accouplement (27, 31) espacée de celle-ci au moyen du dispositif d'entraînement, notamment du moteur électrique, et est accouplé au raccord d'alimentation (14), et **en ce que** l'élément d'accouplement (16) est déplacé à partir de l'au moins une position d'accouplement (27, 31) dans l'au moins une position de parking, dans laquelle il est espacé du raccord d'alimentation, afin d'interrompre la communication fluidique entre le tuyau à lait (10) et le raccord d'alimentation (14).

13. Procédé selon la revendication 12,
**caractérisé en ce**
**qu'**avant de déplacer l'élément d'accouplement (16) dans l'au moins une position d'accouplement (27, 31), le raccord d'alimentation (14) est déplacé, notamment en fermant une porte ayant le raccord d'alimentation (14), dans une position de fonctionnement dans laquelle l'élément d'accouplement (16) peut être et/ou est accouplé au raccord d'alimentation (14) dans sa position d'accouplement (27, 31).
